# EUROPÄISCHE PATENTSCHRIFT

(11) **EP 4 158 279 B1**
(45) Veröffentlichungstag und Bekanntmachung des Hinweises auf die Patenterteilung: **03.07.2024**
(21) Anmeldenummer: 21727797.9
(22) Anmeldetag: 18.05.2021
(51) Int. Cl.: G01D 5/14, G05G 9/047

(54) **VORRICHTUNG, INSBESONDERE JOYSTICK, ZUR ERFASSUNG DER VERKIPPUNG EINES SCHWENKHEBELS**
DEVICE, IN PARTICULAR A JOYSTICK, FOR DETECTING THE TILTING OF A PIVOTED LEVER
DISPOSITIF, NOTAMMENT UN JOYSTICK, POUR DÉTECTER LE BASCULEMENT D'UN LEVIER PIVOTANT

(30) Priorität: 29.05.2020 DE 102020114464
(43) Veröffentlichungstag der Anmeldung: 05.04.2023
(73) Patentinhaber: Max Baermann Gesellschaft mit beschränkter Haftung, 51429 Bergisch Gladbach (DE)
(72) Erfinder: SCHLIESCH, Thomas, 51515 Kürten (DE)
(74) Vertreter: Lippert Stachow Patentanwälte Rechtsanwälte
(86) Internationale Anmeldenummer: PCT/EP2021/063049
(87) Internationale Veröffentlichungsnummer: WO 2021/239498

(56) Entgegenhaltungen:
- WO-A1-2006/106454
- DE-U1-202012 006 199
- US-A1- 2003 094 941
- US-A1- 2016 306 379

## Beschreibung

Die Erfindung betrifft eine Vorrichtung zur Erfassung der Verkippung eines Schwenkhebels mit einem um einen Drehpunkt relativ zu einer vorgegebenen Achse verkippbaren Schwenkhebel mit einer an dem Schwenkhebel angeordneten und mit diesem bewegbaren Magneteinrichtung, mit einer zum Schwenkhebel beabstandeten und zur Erfassung eines Magnetfeldes ausgebildeten Sensoreinrichtung, sowie mit einer Auswerteeinrichtung zur Ermittlung des Kippwinkels in Abhängigkeit des erfassten Magnetfeldes, wobei die Magneteinrichtung zumindest einen Dauermagneten mit zylinderartiger Gestalt und axialer Magnetisierung aufweist und wobei der Schwenkhebel koaxial zu seiner Achse in Richtung zur Sensoreinrichtung translatorisch auslenkbar gehaltert ist.

Derartige Vorrichtungen sind auf dem Gebiet wohlbekannt, beispielsweise bei der Gestaltung eines Joysticks oder einer Steuervorrichtung für eine Arbeitsmaschine. Durch die Verkippung des Schwenkhebels um die vorgegebene Achse aus seiner Ruhelage, d.h. ausgehend von einem Polarwinkel von Null, bei welchem die Achse des Schenkhebels koaxial zur vorgegebenen Achse verläuft, wird bei diesen Vorrichtungen der mit dem Schwenkhebel verbundene und mit diesem bewegte zylinderartige, insbesondere zylindrische Dauermagnet relativ zur Sensoreinrichtung mit verkippt, was sich durch eine Veränderung der Magnetfeldkomponenten senkrecht und lateral zur vorgegebenen Achse und damit in einer Veränderung des entsprechenden Sensorsignals widerspiegelt. Die Auswerteeinrichtung ermittelt aus dem Sensorwert den gesuchten Kippwinkel, der auch als Polarwinkel bezeichnet wird, z.B. in einem hier zweckmäßigen Kugelkoordinatensystem.

Zur Erweiterung der Funktionalität des Schwenkhebels in solchen Steuerungsvorrichtungen bzw. Joysticks besteht der Bedarf, den Schwenkhebel nicht nur azimutal und polar um einen vorgegebenen Drehpunkt zu bewegen, sondern zusätzlich transversal in eine Richtung koaxial zu der Achse des Schwenkhebels. Die beschriebene Detektion des Polarwinkels α unabhängig von der azimutalen Kreisposition des Schwenkhebels zwischen 0 und 360° wird durch den zusätzlichen Freiheitsgrad des Hebelarms massiv gestört, da das am Sensorort herrschende Magnetfeld sowohl vom eingestellten Polarwinkel als auch von der translatorischen Auslenkung des Kipphebels koaxial zu dessen Achse aus seiner Ruhelage abhängt.

Eine gattungsbildende Vorrichtung ist in der US 2016/0306379 A1 und der DE 20 2012 006 199 offenbart.

Der Erfindung liegt die Aufgabe zugrunde, eine herkömmliche Vorrichtung zur Erfassung eines Kippwinkels eines Schwenkhebels so weiterzubilden, dass der Kippwinkel durch einfache Auswertung eines erfassten Magnetfeldes ermittelbar ist, im Wesentlichen unabhängig von einer translatorischen, koaxial zu dessen Achse ausgeführten Auslenkung des Schwenkhebels über einen vorgegebenen Auslenkbereich. Vorzugsweise sollte diese Ermittlung des Kippwinkels auch über übliche Winkelbereiche des Kipp- bzw. Polarwinkels im Bereich zwischen etwa 0 und 25° ermöglicht werden.

Diese Aufgabe löst die vorliegende Erfindung schon mit einer Vorrichtung zur Erfassung eines Kippwinkels eines Schwenkhebels mit den Merkmalen von Anspruch 1.

Dabei zeichnet sich die erfindungsgemäße Vorrichtung dadurch aus, dass der Dauermagnet sich an seiner der Sensoreinrichtung zugewandten Stirnseite über einen vorgegebenen axialen Endabschnitt zu der axialen Stirnseite hin radial verjüngt.

Der erfindungsgemäßen Vorrichtung liegt die grundlegende Idee zugrunde, eine einfache Ermittlung des Kippwinkels des Schwenkhebels bei einer Vorrichtung mit erweiterter Funktionalität dadurch bereitzustellen, dass der zylinderartige Dauermagnet mit uniaxialer Magnetisierung in einem axialen Endabschnitt, welcher der Sensoreinrichtung zugewandt ist, eine spezifische Gestaltung aufweist zur Einstellung eines vorgegebenen Zusammenhangs zwischen dem am Ort der Sensoreinrichtung erfassten Magnetfeldes und dem Kipp- bzw. Polarwinkel, sodass die Ermittlung des Kippwinkels im Wesentlichen unabhängig von der Kreisposition des Hebels (Azimutwinkel) und/oder der translatorischen Auslenkung des Schwenkhebels koaxial zu dessen Achse ist. Die erfindungsgemäße Vorrichtung mit erweiterter Funktionalität kann damit neben der Beweglichkeit in Bezug auf einen Drehpunkt zur Einstellung eines vorgegebenen Polarwinkels und gleichzeitig eines vorgegebenen Azimutwinkels auch eine translatorische Beweglichkeit in Richtung einer Achse des Schwenkhebels aufweisen und eingerichtet sein, die Position des Schwenkhebels in Bezug auf einen Polarwinkel und unabhängig von einem eingestellten Azimutwinkel sowie unabhängig von einer translatorische Auslenkung des Schwenkhebels mittels der Erfassung des an einem stationären Ort herrschenden Magnetfeldes des mit dem Schwenkhebel bewegten Dauermagneten zu ermitteln.

Die Angabe "in der Art eines Zylinders radial verjüngt" meint eine radiale Verjüngung, die nicht in jedem Fall kreisförmig, insbesondere kreisförmig entsprechend eines Kegelstumpfes, zur Achse des Dauermagneten ausgebildet sein muss. Eine Krümmung an der Oberfläche des Dauermagneten in dem Verjüngungsbereich kann beispielsweise auch konkave oder konvexe Abschnitte bzw. konkave oder konvexe Abweichungen von der idealen Kreisform aufweisen. Die Angabe "... der Schwenkhebel ist ... in Richtung zur Sensoreinrichtung translatorisch auslenkbar gehalten bzw. gelagert" meint, dass der Schwenkhebel zumindest mit einer Bewegungskomponente in die vorgegebene Richtung translatorisch bewegt werden kann. Bei unverkipptem Schwenkhebel liegt die Schwenkhebelachse parallel zur vorgegebenen Achse, sodass dann die translatorische Bewegung parallel bzw. koaxial zur vorgegebenen Achse erfolgen kann. Die Angabe "uniaxiale Magnetisierung des Dauermagneten" kann eine einachsige Magnetisierung des Dauermagneten bezeichnen, die parallel zur Achse des Dauermagneten liegt, der beispielsweise zylinderartig sein kann. "Zylinderartige Gestalt" kann dabei meinen, dass in axialer Richtung zumindest ein zylindrischer Abschnitt umfasst ist und/oder dass eine Rotationssymmetrie zumindest über einen axialen Abschnitt vorliegt.

Weiterbildungen der Erfindung sowie weitere erfindungsgemäße Merkmale sind in der nachfolgenden allgemeinen Beschreibung, den Figuren, der Figurenbeschreibung sowie den abhängigen Ansprüchen angegeben.

Zweckmäßigerweise umfasst die erfindungsgemäße Vorrichtung einen stationären Teil, insbesondere ein Gehäuse, an welchem die Sensoreinrichtung angeordnet bzw. befestigt sein kann sowie einen hierzu beweglichen Teil, namentlich den Schwenkhebel, der zum stationären Teil so gelagert sein kann, dass er in Bezug auf einen Drehpunkt zur Einstellung eines vorgegebenen Polarwinkels und eines vorgegebenen Azimutwinkels verdreh- und verkippbar gelagert ist, wobei darüber hinaus der Schwenkhebel koaxial zu seiner Achse, die vorzugsweise durch den Drehpunkt verläuft, translatorisch bewegbar gelagert sein kann.

Zweckmäßigerweise kann vorgesehen sein, dass die Sensoreinrichtung, die zur Bereitstellung von Messwerten für die Ermittlung des Kippwinkels in einer Auswerteeinrichtung ausgebildet ist, eingerichtet ist, sowohl eine axiale magnetische Flussdichte, d.h. eine magnetische Flussdichte parallel zur vorgegebenen Richtung als auch eine hierzu laterale, d.h. radiale magnetische Flussdichte zu erfassen. Um eine laterale magnetische Flussdichte unabhängig von der jeweiligen Kreisposition des Schwenkhebels zu erfassen, kann vorgesehen sein, dass die Sensoreinrichtung als dreikomponentiger Sensor ausgebildet ist, welcher die magnetische Flussdichte in drei zueinander senkrechte Richtungen ermitteln kann. Vorzugsweise kann vorgesehen sein, die Sensoreinrichtung als Hallsensor auszubilden. Es liegt jedoch im Rahmen der Erfindung, auch andere Magnetfeldsensoren einzusetzen, beispielsweise magnetoresistive Sensoren.

Die Auswerteeinrichtung kann zur Ermittlung des Kippwinkels eingerichtet sein, ein Verhältnis von Messsignalwerten der Sensoreinrichtung zu bilden, wobei die ins Verhältnis gesetzten Messsignale eine jeweilige magnetische Flussdichte in zueinander unterschiedliche, insbesondere zueinander senkrechte Richtungen angeben. Beispielsweise kann vorgesehen sein, dass ein Messignalwert, welcher die magnetische Flussdichte in radialer Richtung angibt, ins Verhältnis gesetzt wird zu einem Messsignal einer magnetischen Flussdichte in senkrechter Richtung hierzu, d.h. in die vorgegebene Richtung. Diese vorgegebene Richtung entspricht der Achse des verkippbaren Schwenkhebels bzw. der Achse des Dauermagneten bei Nullstellung des Schwenkhebels in Bezug auf den Polarwinkel. Das so ermittelte Verhältnis kann in einer Ausführungsform proportional zum gesuchten Kippwinkel sein, wobei durch die Bildung des Verhältnisses Änderungen des radialen bzw. lateralen Magnetfeldes, die durch eine translatorische Verschiebung des Schwenkhebels erzeugt werden, durch entsprechende Änderungen des axialen Magnetfeldes, die durch die translatorische Bewegung des Schwenkhebels erzeugt werden, aufgrund der spezifischen Gestaltung des Dauermagneten im Wesentlichen kompensiert werden. Erfindungsgemäß wird damit der Einfluss einer translatorischen Bewegung des Schwenkhebels auf die Ermittlung des Kippwinkels vernachlässigbar innerhalb üblicher Kippwinkelbereiche zwischen etwa +/- 30°. Die beschriebene Gestaltung des über die Erstreckung des vorgegebenen axialen Endabschnittes des Dauermagneten in Form eines sich radial verjüngenden Zylinders bzw. in der Art eines Kegelstumpfes kann in dieser Ausführungsform so ausgebildet sein, dass das beschriebene Verhältnis der beiden Messsignalwerte proportional zum gesuchten Kippwinkel bzw. Polarwinkel und darüber hinaus zumindest über übliche Kippwinkelbereiche zwischen etwa +/-30° unabhängig von einer eventuellen transversalen Auslenkung des Schwenkhebels in Richtung zu dessen Achse ist.

Darüber hinaus können mit der Bildung des Verhältnisses von Messignalwerten eventuell vorhandene magnetische Materialschwankungen im Dauermagneten und/oder durch Temperaturänderungen verursachte Variationen des magnetischen Feldes kompensiert bzw. zumindest teilweise aufgehoben werden. Insbesondere kann mit der beschriebenen Ermittlung des Kippwinkels und der obenstehend erläuterten Gestaltung des Dauermagneten erreicht werden, dass die ermittelten Verhältnisse der Messsignalwerte direkt - unter Umständen bis auf einen Proportionalfaktor - den Kippwinkel angeben, sodass ein einfacher linearer Bezug zwischen dem Quotienten der Messignalwerte und dem gesuchten Kippwinkel bereitgestellt ist.

In einer zweckmäßigen Ausführungsform kann der Dauermagnet der erfindungsgemäßen Vorrichtung einen rein zylindrischen Abschnitt in Achsenrichtung aufweisen, an den sich über einen vorgegebenen axialen Endabschnitt in der Art eines Zylinders ein radial verjüngender Abschnitt anschließt. Insbesondere kann vorgesehen sein, dass der Dauermagnet an seiner der Sensoreinrichtung zugewandten Stirnseite kegelstumpfartig, insbesondere als reiner Kegelstumpf ausgebildet ist. Insbesondere kann vorgesehen sein, dass der Dauermagnet einstückig hergestellt ist, umfassend zumindest die beiden genannten axial sich anschließenden Abschnitte, sodass die Grundfläche des Kegelstumpfabschnitts identisch sein kann zu der Grundfläche des Zylinderabschnitts. Die erfindungsgemäße Vorrichtung kann auch einen solchen Dauermagnet in aufweisen, der eine axiale Bohrungen umfasst, beispielsweise zur abschnittsweisen Aufnahme des Schwenkhebels.

Es sei klargestellt, dass sich die Angabe "axial sich anschließenden Abschnitte des Dauermagneten" bzw. "... kann der Dauermagnet ... . einen rein zylindrischen Abschnitt in Achsenrichtung aufweisen, an den sich über einen vorgegebenen axialen Endabschnitt in der Art eines Zylinders ein radial verjüngender Abschnitt anschließt" auf die Gestalt des Dauermagneten bezieht und hierzu die gleichen Begriffe axial bzw. radial in Bezug auf den magnetischen Fluss an der Sensoreinrichtung unterschiedliche Richtungen bezeichnen können. Eine Identität der Richtungen liegt in solchen Betriebssituationen vor, bei welchen sich der Schwenkhebel in seiner Nullstellung in Bezug auf den Polarwinkel befindet.

Es kann vorgesehen sein, die Höhe und die Planfläche (Deckfläche) des Kegelstumpfs so an den Durchmesser und die Gesamthöhe des zylinderartigen Dauermagneten sowie an den Bereich des Sensorabstandes zum Dauermagneten anzupassen, dass eine obenstehend beschriebene lineare Abhängigkeit zwischen dem gesuchten Kippwinkel und einem Verhältnis bzw. Quotienten zweier Magnetfeldmesswerte in zueinander senkrechte Richtungen vorliegt, wobei vorzugsweise die beiden Magnetfeldkomponenten die axiale Magnetfeldkomponente und die radiale Magnetfeldkomponente sind in Bezug auf die vorgegebene Achse, d.h. auf die Achse des Dauermagneten bei Nullstellung des Schwenkhebels bezüglich des Polarwinkels.

Zweckmäßigerweise kann die Magneteinrichtung einen einzelnen Dauermagneten aufweisen, der rotationssymmetrisch ausgebildet sein kann. Die relative Anordnung des Schwenkhebels zum Dauermagneten kann derartig ausgeführt sein, dass bei der Pollage des Schwenkhebels, d.h. einer Nichtverkippung des Schwenkhebels, die vorgegebene Achse des Schwenkhebels parallel zur Achse des Dauermagneten, insbesondere koaxial zu dieser verläuft.

Vorzugsweise kann vorgesehen sein, dass der Drehpunkt des Schwenkhebels auf der vorgegebenen Achse des Schwenkhebels innerhalb der axialen Erstreckung des Dauermagneten angeordnet ist. Insbesondere kann vorgesehen sein, dass dieser Drehpunkt innerhalb des reinen Zylinderabschnitts des Dauermagneten, d.h. axial außerhalb des sich radial verjüngenden axialen Endabschnitts des Dauermagnetes angeordnet ist. Insbesondere kann vorgesehen sein, dass der Drehpunkt axial mittig innerhalb des Zylinderabschnitts des Dauermagneten angeordnet ist.

Die erfindungsgemäße Vorrichtung ist jedoch nicht auf Ausführungsformen beschränkt, bei welchen der Drehpunkt des Schwenkhebels innerhalb des Dauermagneten angeordnet ist. Insofern kann vorgesehen sein, dass der Drehpunkt des Schwenkhebels auf der vorgegebenen Achse oberhalb des Dauermagneten angeordnet ist.

Als Dauermagnet für die erfindungsgemäße Vorrichtung sind prinzipiell Magnete einsetzbar, die in Bezug auf ihre Gestalt wie beschrieben ausbildbar und uniaxial magnetisierbar sind. Beispielsweise kann zur Gestaltung eines für die erfindungsgemäße Vorrichtung einsetzbaren Dauermagneten ein kunststoffgebundener Magnet eingesetzt werden, insbesondere ein gespritzter oder gepresster Magnet. Gepresste kunststoffgebundene Magnete können beispielsweise ein NgFeB-Pulver umfassen, das in einer duroplastischen Epoxidharz-Matrix eingebettet ist, wobei diese Magnete axial in Werkzeugen gepresst werden können. Gespritzte Magnete können beispielsweise durch Einbettung von Hartferrit- oder Seltenerdmagnetpulver in thermoplastischen Kunststoffen hergestellt werden. Zur Bereitstellung von Dauermagneten mit hoher Remanenz sind in der erfindungsgemäßen Vorrichtung auch Dauermagnete einsetzbar, die als gesinterte Magnete hergestellt sind. Ein typischer Grundwerkstoff kann auch hier NdFeB sein. Da die gesinterten Magnete eine höhere Herstellungstoleranz als kunststoffgebundene, gespritzte Magnete aufweisen, sind in der erfindungsgemäßen Vorrichtung ohne weiteres gesinterte Magnete einsetzbar, da die Bestimmung des Kippwinkels in der erfindungsgemäßen Vorrichtung vergleichsweise unempfindlich in Bezug auf Herstellungstoleranzen ist.

Die Beabstandung des mit dem Schwenkhebel bewegten Dauermagneten relativ zur Sensoreinrichtung in Nulllage des Schwenkhebels in Bezug auf den Polarwinkel kann je nach Ausführungsform etwa zwischen 4 mm und 10 mm, insbesondere zwischen 5 mm bis 8 mm betragen, wobei dieser Abstand sich auf eine Betriebssituation mit nicht transversal ausgelenktem Schwenkhebel beziehen kann. Dabei kann vorgesehen sein, die transversale Auslenkung des Schwenkhebels zu dessen Achse auf einen Wert zwischen 1 mm bis 3 mm, insbesondere einen Wert zwischen 1 mm und 2 mm einzustellen. Beispielsweise kann die Vorrichtung so ausgebildet sein, dass der Schwenkhebel über die vorgegebene Strecke transversal an einem Anschlag bewegbar ist, beispielsweise um einen elektrischen Kontakt auszulösen.

Die weitere Gestaltung des Dauermagneten für die erfindungsgemäße Vorrichtung kann von vorgegebene Randbedingungen in der Konstruktion der Vorrichtung, insbesondere des Joysticks, abhängen. Beispielsweise kann vorgesehen sein, dass der Durchmesser des rein zylinderförmigen Abschnittes einen Wert aufweist, der zwischen 4 mm und 5 mm liegt, insbesondere etwa 4 mm beträgt. Die axiale Höhe des rein zylinderförmigen Abschnitts des Dauermagneten kann z.B. auf einen Wert eingestellt sein, der zwischen 1,5 mm und 3 mm, insbesondere zwischen 1,8 mm und 2,8 mm liegt. Ferner kann die axiale Höhe des sich radial verjüngenden Endabschnitts des Dauermagneten z.B. auf einen Wert eingestellt sein, der zwischen 1,2 mm und 1,6 mm liegt. Der Durchmesser der Deckfläche des sich verjüngenden Abschnittes kann z.B. einen Wert aufweisen, der je nach Ausführungsform zwischen 0,9 mm und 3 mm liegt.

Insbesondere in solchen Ausführungsformen der Erfindung, bei welchen der Drehpunkt des Schwenkhebels auf der vorgegebenen Achse des Schwenkhebels oberhalb der axialen Erstreckung des Dauermagneten angeordnet ist, z.B. mit einem Abstand > 0 mm und ≤ 1 mm zum Dauermagneten, kann vorgesehen sein, dass der Durchmesser des rein zylinderförmigen Abschnittes einen Wert aufweist, der zwischen 5 mm und 7 mm liegt, insbesondere etwa 6 mm beträgt. Bei solchen Ausführungsformen kann die axiale Höhe des rein zylinderförmigen Abschnitts des Dauermagneten auf einen Wert eingestellt sein, der zwischen 1,5 mm und 2,5 mm liegt, insbesondere 2,0 mm betragen. Ferner kann die axiale Höhe des sich radial verjüngenden Endabschnitts des Dauermagneten bei solchen Ausführungsformen auf einen Wert eingestellt sein, der zwischen 0,75 mm und 1,4 mm liegt, insbesondere 1 mm beträgt. Der Durchmesser der Deckfläche des sich verjüngenden Abschnittes kann bei solchen Ausführungsformen einen Wert aufweisen, der zwischen 0,75 mm und 1,5 mm liegt, insbesondere 1 mm beträgt. Bei den angegebenen, solchen Ausführungsformen, bei welchen wie beschrieben der Drehpunkt des Schwenkhebels auf der vorgegebenen Achse des Schwenkhebels oberhalb der axialen Erstreckung des Dauermagneten angeordnet ist, z.B. mit einem Abstand > 0 mm und ≤ 1 mm zum Dauermagneten, kann der Abstand zwischen der Sensoreinrichtung und dem Dauermagneten im nicht translatorisch ausgelenkten Zustand in die vorgegebene Z-Richtung zwischen 5,5 mm und 8 mm liegen, insbesondere 6,1 mm betragen, während durch die translatorische Auslenkungen des Schwenkhebels in Z-Richtung bei Nulllage des Schwenkhebel in Bezug auf den Polarwinkel sich dieser Abstand auf einen Wert zwischen etwa 4,5 mm und 6,5 mm vermindern kann, insbesondere auf einen Wert von 4,8 mm.

Besonders vorteilhafte Gestaltungen eines Dauermagneten für die erfindungsgemäße Vorrichtung, insbesondere in Bezug auf die beschriebene Linearität des Quotienten der Magnetfeldkomponenten und des gesuchten Kippwinkels sind realisierbar, wenn das Verhältnis des Durchmessers des rein zylinderförmigen Abschnittes des Dauermagneten zur Gesamthöhe des Dauermagneten zwischen etwa 1,2 und 1,3 liegt. Das Verhältnis der Höhe des rein zylinderförmigen Abschnittes des Dauermagneten zur axialen Höhe des sich verjüngenden Abschnittes des Dauermagneten kann insbesondere zwischen 1,45 und 1,65 liegen. Das Verhältnis des Durchmessers der Deckfläche des sich verjüngenden Abschnittes zur axialen Höhe des sich verjüngenden Abschnittes kann insbesondere zwischen 0,7 und 2 liegen.

Die Erfindung wird im Folgenden durch das Beschreiben einiger Ausführungsformen unter Bezugnahme auf die beiliegenden Figuren erläutert, wobei
- Figur 1: in einer skizzenhaften Darstellung eine erfindungsgemäße Vorrichtung mit verkipptem Schwenkhebel,
- Figur 2: in einer skizzenhaften Darstellung die erfindungsgemäße Vorrichtung der Fig. 1 bei einer Polstellung des Schwenkhebels, jedoch in zwei translatorisch unterschiedlichen Auslenkungspositionen, und
- Figur 3: den Verlauf eines Quotienten zweier Magnetfeldkomponenten in Abhängigkeit des Kippwinkels α bei zwei unterschiedlichen translatorischen Auslenkungen des Schwenkhebels zeigt.

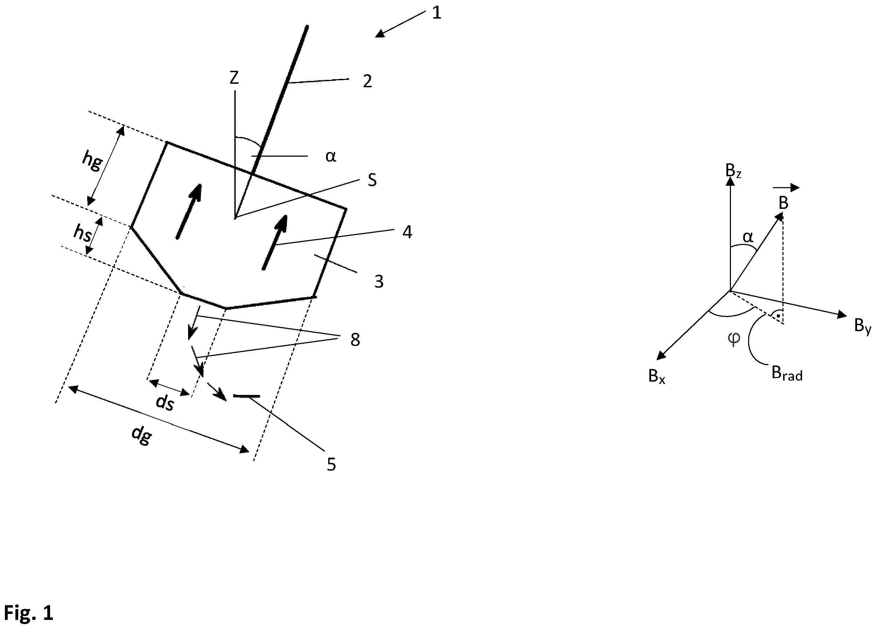

Die Erfindung wird im Folgenden mit Bezug auf die Gestaltung eines Joysticks beschrieben, wie er beispielsweise bei Computerspielen Verwendung finden kann. Figur 1 zeigt eine skizzenhafte Darstellung eines solchen Joysticks 1, welcher einen Schwenkhebel 2 sowie einen daran befestigten Dauermagneten 3 umfasst, der zylinderartig ausgebildet ist und eine uniaxiale Magnetisierung 4 parallel zur Achse des Dauermagneten aufweist. Der Schwenkhebel 2 ist um einen Drehpunkt S drehbar gelagert, wobei der in Figur 1 angegebene Kippwinkel α den Polarwinkel darstellt, um welchen der Schwenkhebel 2 um eine vorgegebene Achse, hier die Z-Achse, die in der beschriebenen Ausführungsform koaxial zur Symmetrieachse des Dauermagneten 3 bei einem Kippwinkel α = 0 verläuft, ausgelenkt ist. Insofern ist der Schwenkhebel 2 mit daran angebrachtem Magneten 3 bewegbar gelagert relativ zu einem stationären Teil der Vorrichtung, beispielsweise einem Gehäuse des Joysticks 1, der bzw. das in der Figur 1 nicht dargestellt ist. Am stationären Teil der Vorrichtung 1 angeordnet ist ein dreikomponentiger Hallsensor 5, der ausgebildet ist, das vom Magneten ausgehende Magnetfeld bezüglich seiner Magnetfeldkomponenten Bz, By, Bx zu erfassen. Beispielhafte Magnetfeldlinien sind in der Figur mit dem Bezugszeichen 8 gekennzeichnet. In der beschriebenen Ausführungsform ist der Schwenkhebel 2 um den Drehpunkt S sowohl um einen Polarwinkel α verkippbar als auch in der zur vorgegebenen Achse bzw. Richtung Z senkrechten X-Y-Ebene schwenkbar. Diese Verschwenkung bezüglich der Kreisposition des Hebels ist durch Angabe eines Azimutwinkels ϕ angebbar, siehe das in Figur 1 angegebene Koordinatensystem der Magnetfeldkomponenten Bx, By und Bz, das hier ortsfest zur Sensoreinrichtung zu betrachten ist im Unterschied zum wie beschriebenen bewegbaren Schwenkhebel. Wie dargestellt, wird die radiale bzw. laterale Feldkomponente Brad durch die beiden Komponenten Bx und By festgelegt. Die Erfassung der Magnetfeldkomponenten Bx, By, Bz über den dreikomponentigen Sensor 5 ermöglicht in einer nicht dargestellten Auswerteeinrichtung die Bestimmung der Auslenkung um den Polarwinkel α des Schwenkhebels 2 zur vorgegebenen Achse Z und darüber hinaus auch die Bestimmung des Azimutwinkels (p in der Kreisebene X, Y.

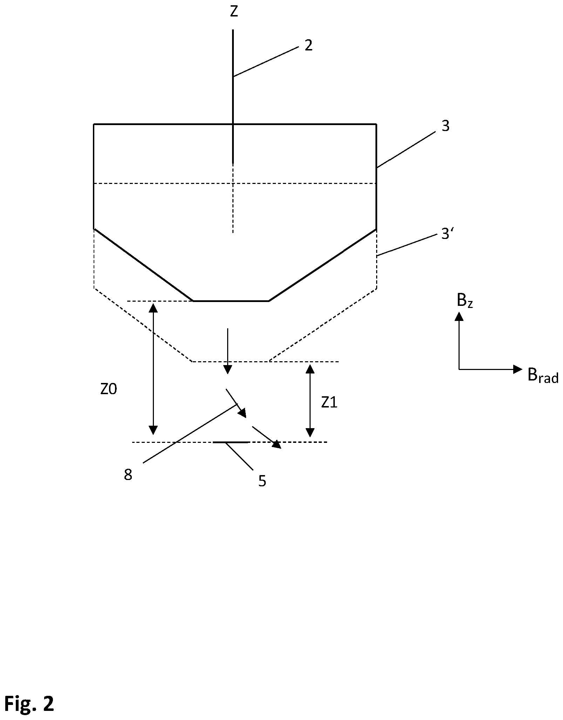

Die Lagerung des Schwenkhebels 2 der erfindungsgemäßen Vorrichtung ist in der beschriebenen Ausführungsform so realisiert, dass der Schwenkhebel koaxial zu seiner Achse in Richtung zum stationär gelagerten dreikomponentigen Sensor 5 über eine vorgegebene Erstreckung translatorisch bewegbar ist, in einer Ausführungsform beispielsweise um 1,3 mm. Diese translatorische Bewegung des Schwenkhebels 2, 2' und damit des Magneten 3, 3' in Richtung der Achse des Schwenkhebels um die Strecke (z0 - z1) ist in Figur 2 skizziert, wobei zur Vereinfachung der Darstellung der Kippwinkel α gleich null eingestellt ist. In dieser speziellen Betriebssituation liegt insofern die Achse des Schwenkhebels koaxial zur vorgegebenen Achse (z-Richtung).

Um auch bei der erfindungsgemäßen Gestaltung der Vorrichtung 1 eine vergleichsweise einfache Ermittlung des Kippwinkels α und einen einfachen Zusammenhang zwischen dem gemessenen Magnetfeld und dem gesuchten Kippwinkel bereitzustellen, ist der Dauermagnet 3 der erfindungsgemäßen Vorrichtung 1 in spezifischer Weise gestaltet. Wie aus den Figuren 1, 2 hervorgeht, weist dieser über seine axiale Höhe hg eine rein zylinderförmige Gestalt auf, während er über eine sich an den erstgenannten Abschnitt des Magneten 3 anschließenden zweiten Abschnitt eine axialen Erstreckung hs aufweist. Dieser zweite Abschnitt ist in der beschriebenen Ausführungsform kegelstumpfartig mit kreisförmigem Durchmesser ausgebildet mit einem Deckflächendurchmesser ds, während die Grundfläche des zylinderförmigen Abschnittes als auch des sich daran anschließenden radial verjüngenden Abschnittes einen Durchmesser dg aufweist.

In der bislang beschriebenen Ausführungsform kann der Durchmesser dg des rein zylinderförmigen Abschnittes des Dauermagneten 4,1 mm, die axiale Höhe hg des zylinderförmigen Abschnittes 2 mm, die axiale Höhe hs des Kegelstumpfs 1,3 mm und der Durchmesser ds der Deckfläche des Kegelstumpfs 0,95 mm betragen. In dieser Ausführungsform kann der Abstand zwischen der Sensoreinrichtung und dem Dauermagneten 3 im nicht translatorisch ausgelenkten Zustand in die vorgegebene Richtung Z 6,1 mm betragen, während durch die translatorische Auslenkungen des Schwenkhebels in Z-Richtung bei Nulllage des Schwenkhebels in Bezug auf den Polarwinkel sich der Abstand auf 4,8 mm vermindert.

Durch die beschriebene Anordnung des zum stationären Teil der erfindungsgemäßen Vorrichtung 1 beweglichen Schwenkhebels mit dem von diesem mitbewegten Dauermagneten und durch die beschriebene beispielhafte geometrische Gestaltung des Dauermagneten 3 vereinfacht sich insbesondere die Ermittlung des Kippwinkels α entsprechend dem Polarwinkel, um welchen der Schwenkhebel zur vorgegebenen Achse, d.h. der Z-Achse verschwenkt ist. Diese Ermittlung kann mit der erfindungsgemäßen Vorrichtung unabhängig von einer möglichen transversalen Verschiebung des Schwenkhebels in Richtung seiner Achse erfolgen. Die erfindungsgemäße Vorrichtung 1 weist zur Ermittlung des gesuchten Kippwinkels eine Auswerteeinrichtung auf, die eingangsseitig mit dem Ausgang der Sensoreinrichtung verbunden ist und Messsignale empfängt, welche die Magnetfeldkomponenten der drei Raumrichtungen Bx, By, und Bz angeben, siehe Fig. 1. Die Auswerteeinrichtung, beispielsweise in Form eines Mikroprozessors mit Schnittstellen zum Empfangen und Umwandlung der Sensorsignale, ist in der erfindungsgemäßen Vorrichtung eingerichtet, ein Verhältnis (Quotient) zu bilden zwischen einem Wert für die laterale (radiale) magnetische Flussdichte Brad und einem Wert für die gemessene axialen magnetischen Flussdichte Bz, wobei sich die radiale magnetische Flussdichte Brad aus den zur axialen Richtung senkrechten Magnetkomponenten Bx, By zusammensetzt, siehe Figur 1. Es sei nochmals bemerkt, dass die axiale Richtung der magnetischen Flussdichte mit der Achse des Schwenkhebels bzw. des Dauermagneten zusammenfällt, wenn der Schwenkhebel seine Nulllage in Bezug auf den Polwinkel α einnimmt.

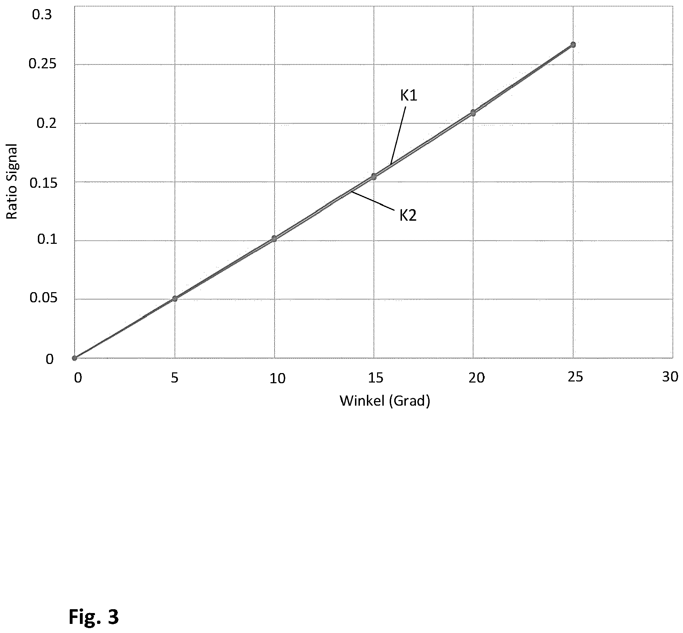

Figur 3 zeigt das bezeichnete Verhältnis Brad/Bz in Abhängigkeit des Kippwinkels α für den Abstand Z1 in dem Kurvenverlauf K1 und für den Abstand Z0 mit dem Kurvenverlauf K2. Erkennbar ergibt sich durch die erfindungsgemäße Gestaltung der Vorrichtung ein linearer Zusammenhang zwischen dem Verhältnis Brad/Bz unabhängig von der translatorischen Auslenkung des Schwenkhebels in Richtung der Achse des Schwenkhebels. Neben der Bereitstellung des angegebenen linearen Zusammenhangs zwischen dem Quotienten Brad/Bz ermöglicht die erfindungsgemäße Gestaltung ferner eine einfache Ermittlung des Kippwinkels, da dieser ohne besondere komplexe Berechnungen allein aus dem Bilden des Verhältnisses der von der Sensoreinrichtung ausgegebenen Signalwerten bestimmt werden kann.

In der beschriebenen Ausführungsform ist der Dauermagnet der erfindungsgemäßen Vorrichtung 1 als gesinterter Magnet mit einem NgFeB-Grundwerkstoff hergestellt. In einer anderen Ausführungsform kann der Dauermagnet auch als kunststoffgebundener Magnet hergestellt sein.

Der Fachmann erkennt, dass die erfindungsgemäße Vorrichtung auch mit anderen geometrischen Gestaltungen des Dauermagneten im Rahmen der Ansprüche umsetzbar ist. Beispielhafte Ausführungsformen sind untenstehend mit den diskutierten Gestaltungsparametern der Vorrichtung angegeben.

| Pos. | 1 | 2 | 3 | 4 | 5 |
|---|---|---|---|---|---|
| dg [mm] | 4,0 | 4,1 | 4,1 | 4,0 | 5,0 |
| hg [mm] | 2,0 | 2,0 | 2,0 | 2,0 | 2,5 |
| hs [mm] | 1,25 | 1,3 | 1,3 | 1,3 | 1,55 |
| ds [mm] | 1,0 | 0,95 | 0,95 | 1,50 | 3,0 |
| Z0 [mm] | 6,1 | 6,1 | 6,9 | 7,4 | 7,6 |
| Z1 [mm] | 4,8 | 4,8 | 4,9 | 6,1 | 6,3 |

Die unter Pos. 1 bis Pos. 5 angegebenen erfindungsgemäß gestalteten Vorrichtungen können bis auf die tabellarisch angegebenen Parameter identisch aufgebaut sein und zeigen alle einen linearen Verlauf des Quotienten Brad/Bz zum gesuchten Kippwinkel α.

### Bezugszeichenliste

- 1: Joystick
- 2, 2': Schwenkhebel
- 3, 3': Magnet, Dauermagnet
- 4: Magnetisierung
- 5: Dreikomponentiger Sensor, Sensoreinrichtung
- 8: Magnetfeldline
- S: Drehpunkt
- α: Polarwinkel
- Bx, By, Bz, Brad: Magnetfeldkomponenten
- B: Magnetfeld
- dg: Durchmesser
- ds: Durchmesser
- hg: Axiale Höhe
- hs: Axiale Höhe
- K1, K2: Kurvenverlauf

## Patentansprüche

1. Vorrichtung, insbesondere Joystick zur Erfassung eines Kippwinkels (α) eines Schwenkhebels (2, 2'), mit einem um einen Drehpunkt (S) relativ zu einer vorgegebenen Achse (Z) verkippbaren Schwenkhebel (2, 2') mit einer an dem Schwenkhebel angeordneten und mit diesem bewegbaren Magneteinrichtung sowie einer zum Schwenkhebel beabstandeten und zur Erfassung eines Magnetfeldes ausgebildeten Sensoreinrichtung (5), sowie mit einer Auswerteeinrichtung zur Ermittlung des Kippwinkels in Abhängigkeit des erfassten Magnetfeldes, wobei die Magneteinrichtung zumindest einen Dauermagneten (3, 3') mit zylinderartiger Gestalt und uniaxialer Magnetisierung aufweist, wobei der Schwenkhebel (2, 2') koaxial zu seiner Achse in Richtung zur Sensoreinrichtung (5) translatorisch auslenkbar gehaltert ist, **dadurch gekennzeichnet**, das s der Dauermagnet (3, 3') sich an seiner der Sensoreinrichtung (5) zugewandten Stirnseite über die Erstreckung (hs) eines vorgegebenen axialen Endabschnitts zu der axialen Stirnseite hin radial verjüngt.

2. Vorrichtung nach Anspruch 1, **dadurch gekennzeichnet, dass** die Sensoreinrichtung (5) eingerichtet ist, sowohl eine axiale magnetische Flussdichte (Bz) als auch eine laterale (radiale) magnetische Flussdichte (Brad) zu erfassen.

3. Vorrichtung nach Anspruch 1 oder 2, **dadurch gekennzeichnet,** das s die Auswerteeinrichtung zur Ermittlung des Kippwinkels (α) eingerichtet ist, ein Verhältnis von zwei Messsignalwerten der Sensoreinrichtung (5) zu bilden, wobei die beiden Messsignale eine jeweilige magnetische Flussdichte (Bz, Brad) in zueinander unterschiedliche Richtungen angeben.

4. Vorrichtung nach einem der Ansprüche 1 bis 3,
**dadurch gekennzeichnet, dass** der Dauermagnet (3, 3') an seiner der Sensoreinrichtung (5) zugewandten Stirnseite kegelstumpfartig ausgebildet ist.

5. Vorrichtung nach einem der Ansprüche 1 bis 4,
**dadurch gekennzeichnet, dass** der Dauermagnet (3, 3') rotationssymmetrisch ausgebildet ist.

6. Vorrichtung nach einem der Ansprüche 1 bis 5,
**dadurch gekennzeichnet, dass** bei einer Betriebsstellung mit ungekipptem Schwenkhebel (2, 2') der Drehpunkt (S) des Schwenkhebels (2, 2') auf der vorgegebenen Achse (z) innerhalb der axialen Erstreckung des Dauermagneten angeordnet ist.

7. Vorrichtung nach einem der Ansprüche 1 bis 5,
**dadurch gekennzeichnet, dass** bei einer Betriebsstellung mit ungekipptem Schwenkhebel (2, 2') der Drehpunkt (S) des Schwenkhebels (2, 2') auf der vorgegebenen Achse (z) oberhalb des Dauermagneten angeordnet ist

8. Vorrichtung nach einem der Ansprüche 1 bis 7,
**dadurch gekennzeichnet, dass** bei einer Betriebsstellung mit ungekipptem Schwenkhebel (2, 2') die Achse des Dauermagneten (3, 3') koaxial zur vorgegebenen Achse verläuft.

9. Vorrichtung nach einem der Ansprüche 1 bis 8,
**dadurch gekennzeichnet, dass** der Dauermagnet (3, 3') ein kunststoffgebundener, gespritzter oder gepresster Magnet ist.

10. Dauermagnet (3, 3`)zur Verwendung in einer Vorrichtung nach einem der Ansprüche 1 bis 9, der eine zylinderartige Gestalt mit uniaxialer Magnetisierung aufweist und sich an einer axialen Stirnseite über die Erstreckung (hs) eines vorgegebenen axialen Endabschnitt zu der axialen Stirnseite hin radial verjüngt, **dadurch gekennzeichnet**, das s der Dauermagnet (3, 3') in seiner axialen Erstreckung (hg + hs) einen rein zylinderförmigen Abschnitt und einen Kegelstumpf mit identischer Grundfläche aufweist, wobei letzterer sich in axialer Richtung an den zylinderförmigen Abschnitt anschließt.

11. Dauermagnet (3, 3') nach Anspruch 10, **dadurch gekennzeichnet**, das s der Durchmesser (dg) des rein zylinderförmigen Abschnittes des Dauermagneten (3, 3') zwischen 4 mm und 5 mm, und/oder die axiale Höhe (hg) des rein zylinderförmigen Abschnittes zwischen 1,8 mm und 2,8 mm, und/oder die axiale Höhe (hs) des Kegelstumpfs zwischen 1,2 mm und 1,6 mm, und/oder der Durchmesser (ds) der Deckfläche des Kegelstumpfs zwischen 0,9 mm und 3 mm liegt.

12. Dauermagnet (3, 3') nach Anspruch 10 oder 11,
**dadurch gekennzeichnet, dass** das Verhältnis des Durchmessers (dg) des rein zylinderförmigen Abschnittes des Dauermagneten zur Gesamthöhe (hg + hs) des Dauermagneten zwischen 1,2 und 1,3 liegt.

13. Dauermagnet (3, 3') nach Anspruch 10, 11 oder 12,
**dadurch gekennzeichnet, dass** das Verhältnis der Höhe (hg) des rein zylinderförmigen Abschnittes des Dauermagneten zur axialen Höhe (hs) des Kegelstumpfs zwischen 1,45 und 1,65 liegt.

14. Dauermagnet (3, 3') nach einem der Ansprüche 11 bis 13,
**dadurch gekennzeichnet, dass** das Verhältnis des Durchmessers der Deckfläche (ds) des Kegelstumpfes zur axialen Höhe (hs) des Kegelstumpfs zwischen 0,7 und 2 liegt.

15. Verwenden eines Dauermagneten (3, 3`), der eine zylinderartige Gestalt mit uniaxialer Magnetisierung aufweist und sich an einer axialen Stirnseite über die Erstreckung (hs) eines vorgegebenen axialen Endabschnitts zu der axialen Stirnseite hin radial verjüngt in einer Vorrichtung nach einem der Ansprüche 1 bis 8.

## Claims

1. Device, in particular joystick, for detecting a tilt angle (α) of a pivot lever (2, 2'), the device comprising a pivot lever (2, 2') which can be tilted about a pivot point (S) relative to a predetermined axis (Z), a magnet device arranged on the pivot lever and movable with the latter, and a sensor device (5) which is spaced apart from the pivot lever and is designed to detect a magnetic field, and an evaluation device for determining the tilt angle as a function of the detected magnetic field, the magnet device having at least one permanent magnet (3, 3') with a cylindrical shape and uniaxial magnetization, the pivoting lever (2, 2') being mounted so as to be deflectable in translation coaxially with its axis in the direction of the sensor device (5), **characterized in that** the permanent magnet (3, 3') tapers radially at its end face facing the sensor device (5) over the extent (hs) of a predetermined axial end section towards the axial end face.

2. Device according to claim 1, **characterized in that** the sensor device (5) is configured to detect both an axial magnetic flux density (Bz) and a lateral (radial) magnetic flux density (Brad).

3. Device according to claim 1 or 2, **characterized in that** the evaluation device for determining the tilt angle (α) is configured to create a ratio of two measurement signal values of the sensor device (5), the two measurement signals indicating a respective magnetic flux density (Bz, Brad) in mutually different directions.

4. Device according to any one of claims 1 to 3, **characterized in that** the permanent magnet (3, 3') has a frustoconical shape on its end face facing the sensor device (5).

5. Device according to any one of claims 1 to 4, **characterized in that** the permanent magnet (3, 3') is rotationally symmetrical.

6. Device according to any one of claims 1 to 5, **characterized in that,** in an operating position with the pivot lever (2, 2') not tilted, the pivot point (S) of the pivot lever (2, 2') is arranged on the predetermined axis (z) within the axial extension of the permanent magnet.

7. Device according to any one of claims 1 to 5, **characterized in that,** in an operating position with the pivot lever (2, 2') not tilted, the pivot point (S) of the pivot lever (2, 2') is arranged on the predetermined axis (z) above the permanent magnet.

8. Device according to any one of claims 1 to 7, **characterized in that,** in an operating position with the pivot lever (2, 2') not tilted, the axis of the permanent magnet (3, 3') extends coaxially with the predetermined axis.

9. Device according to one of claims 1 to 8, **characterized in that** the permanent magnet (3, 3') is a plastic-bonded, injection-molded or pressed magnet.

10. Permanent magnet (3, 3') for use in a device according to any one of claims 1 to 9, which has a cylindrical shape with uniaxial magnetization and tapers radially at an axial end face over the extent (hs) of a predetermined axial end section towards the axial end face, **characterized in that** the permanent magnet (3, 3') has in its axial extension (hg + hs) a purely cylindrical section and a truncated cone with an identical base area, the latter adjoining the cylindrical section in the axial direction.

11. Permanent magnet (3, 3') according to claim 10, **characterized in that** the diameter (dg) of the purely cylindrical section of the permanent magnet (3, 3') is between 4 mm and 5 mm and/or the axial height (hg) of the purely cylindrical section is between 1.8 mm and 2.8 mm and/or the axial height (hs) of the truncated cone is between 1.2 mm and 1.6 mm and/or the diameter (ds) of the top surface of the truncated cone is between 0.9 mm and 3 mm.

12. Permanent magnet (3, 3') according to claim 10 or 11, **characterized in that** the ratio of the diameter (dg) of the purely cylindrical section of the permanent magnet to the total height (hg + hs) of the permanent magnet is between 1.2 and 1.3.

13. Permanent magnet (3, 3') according to claim 10, 11 or 12, **characterized in that** the ratio of the height (hg) of the purely cylindrical section of the permanent magnet to the axial height (hs) of the truncated cone is between 1.45 and 1.65.

14. Permanent magnet (3, 3') according to any one of claims 11 to 13, **characterized in that** the ratio of the diameter of the top surface (ds) of the truncated cone to the axial height (hs) of the truncated cone is between 0.7 and 2.

15. Use of a permanent magnet (3, 3') which has a cylindrical shape with uniaxial magnetization and tapers radially at an axial end face over the extent (hs) of a predetermined axial end section towards the axial end face in a device according to any one of claims 1 to 8.

## Revendications

1. Dispositif, notamment joystick, pour la détection d'un angle de basculement (α) d'un levier pivotant (2, 2'), le dispositif comprenant un levier pivotant (2, 2') pouvant basculer autour d'un point de rotation (S) par rapport à un axe (Z) prédéfini, un dispositif magnétique disposé sur le levierpivotant et mobile avec celui-ci, ainsi qu'un dispositif de détection (5) espacé du levier pivotant et conçu pour la détection d'un champ magnétique, ainsi qu'un dispositif d'évaluation pour déterminer l'angle de basculement en fonction du champ magnétique détecté, le dispositif magnétique présentant au moins un aimant permanent (3, 3') de forme cylindrique et à magnétisation uniaxiale, le levier pivotant (2, 2') étant maintenu de manière à pouvoir être dévié en translation coaxialement à son axe en direction du dispositif de détection (5), **caractérisé en ce que** l'aimant permanent (3, 3') se rétrécit radialement sur sa face frontale tournée vers le dispositif de détection (5) sur l'étendue (hs) d'une section d'extrémité axiale prédéterminée vers la face frontale axiale.

2. Dispositif selon la revendication 1, **caractérisé en ce que** le dispositif de détection (5) est conçu pour détecter à la fois une densité de flux magnétique axiale (Bz) et une densité de flux magnétique latérale (radiale) (Brad).

3. Dispositif selon la revendication 1 ou 2, **caractérisé en ce que** le dispositif d'évaluation pour déterminer l'angle d'inclinaison (α) est agencé pour former un rapport de deux valeurs de signaux de mesure du dispositif de détection (5), les deux signaux de mesure indiquant une densité de flux magnétique respective (Bz, Brad) dans des directions mutuellement différentes.

4. Dispositif selon l'une quelconque des revendications 1 à 3, **caractérisé en ce que** l'aimant permanent (3, 3') est de forme tronconique sur sa face frontale tournée vers le dispositif de détection (5).

5. Dispositif selon l'une quelconque des revendications 1 à 4, **caractérisé en ce que** l'aimant permanent (3, 3') est réalisé avec une symétrie de révolution.

6. Dispositif selon l'une quelconque des revendications 1 à 5, **caractérisé en ce que,** dans une position de fonctionnement avec levier pivotant (2, 2') non basculé, le centre de rotation (S) du levier pivotant (2, 2') est disposé sur l'axe (z) prédéterminé dans l'extension axiale de l'aimant permanent.

7. Dispositif selon l'une quelconque des revendications 1 à 5, **caractérisé en ce que,** dans une position de fonctionnement avec levier pivotant (2, 2') non basculé, le centre de rotation (S) du levier pivotant (2, 2') est disposé sur l'axe (z) prédéterminé au-dessus de l'aimant permanent.

8. Dispositif selon l'une quelconque des revendications 1 à 7, **caractérisé en ce que,** dans une position de fonctionnement avec le levier pivotant (2, 2') non basculé, l'axe de l'aimant permanent (3, 3') est coaxial à l'axe prédéterminé.

9. Dispositif selon l'une quelconque des revendications 1 à 8, **caractérisé en ce que** l'aimant permanent (3, 3') est un aimant à liant plastique, injecté ou pressé.

10. Aimant permanent (3, 3') destiné à être utilisé dans un dispositif selon l'une quelconque des revendications 1 à 9, qui présente une forme cylindrique avec une magnétisation uniaxiale et qui se rétrécit radialement sur une face frontale axiale sur l'étendue (hs) d'une section d'extrémité axiale prédéfinie vers la face frontale axiale, **caractérisé en ce que** l'aimant permanent (3, 3') présente dans son extension axiale (hg + hs) une section purement cylindrique et un cône tronqué avec une surface de base identique, ce dernier se raccordant dans la direction axiale à la section cylindrique.

11. Aimant permanent (3, 3') selon la revendication 10, **caractérisé en ce que** le diamètre (dg) de la section purement cylindrique de l'aimant permanent (3, 3') est compris entre 4 mm et 5 mm et/ou la hauteur axiale (hg) de la section purement cylindrique est comprise entre 1,8 mm et 2,8 mm et/ou la hauteur axiale (hs) du cône tronqué est comprise entre 1,2 mm et 1,6 mm et/ou le diamètre (ds) de la surface de couverture du cône tronqué est compris entre 0,9 mm et 3 mm.

12. Aimant permanent (3, 3') selon la revendication 10 ou 11, **caractérisé en ce que** le rapport entre le diamètre (dg) de la partie purement cylindrique de l'aimant permanent et la hauteur totale (hg + hs) de l'aimant permanent est compris entre 1,2 et 1,3.

13. Aimant permanent (3, 3') selon la revendication 10, 11 ou 12, **caractérisé en ce que** le rapport entre la hauteur (hg) de la partie purement cylindrique de l'aimant permanent et la hauteur axiale (hs) du cône tronqué est compris entre 1,45 et 1,65.

14. Aimant permanent (3, 3') selon l'une quelconque des revendications 11 à 13, **caractérisé en ce que** le rapport entre le diamètre de la surface de recouvrement (ds) du cône tronqué et la hauteur axiale (hs) du cône tronqué est compris entre 0,7 et 2.

15. Utilisation d'un aimant permanent (3, 3') présentant une forme cylindrique à magnétisation uniaxiale et se rétrécissant radialement sur une face axiale sur l'étendue (hs) d'une section d'extrémité axiale prédéterminée vers la face axiale dans un dispositif selon l'une quelconque des revendications 1 à 8.
